# EUROPÄISCHE PATENTSCHRIFT

(11) **EP 2 773 882 B1**
(45) Veröffentlichungstag und Bekanntmachung des Hinweises auf die Patenterteilung: **06.04.2016**
(21) Anmeldenummer: 12780729.5
(22) Anmeldetag: 30.10.2012
(51) Int. Cl.: F16D 65/56, F16D 65/18

(54) **NACHSTELLVORRICHTUNG FÜR EINE SCHEIBENBREMSE**
ADJUSTMENT DEVICE FOR A DISK BRAKE
DISPOSITIF DE RATTRAPAGE POUR FREIN À DISQUE

(30) Priorität: 03.11.2011 DE 102011117587
(43) Veröffentlichungstag der Anmeldung: 10.09.2014
(73) Patentinhaber: KNORR-BREMSE Systeme für Nutzfahrzeuge GmbH, 80809 München (DE)
(72) Erfinder: TROPP, Martin, 84364 Bad Birnbach (DE)
(86) Internationale Anmeldenummer: PCT/EP2012/071450
(87) Internationale Veröffentlichungsnummer: WO 2013/064482

(56) Entgegenhaltungen:
- WO-A1-2006/099938
- DE-A1-102004 037 771
- DE-A1-102008 035 366
- US-A1- 2005 034 935

## Beschreibung

Die Erfindung betrifft eine Nachstellvorrichtung für eine Scheibenbremse, insbesondere pneumatisch betätigte Scheibenbremse, nach dem Oberbegriff des Anspruchs 1.

Nachstellvorrichtungen für Scheibenbremsen gibt es in unterschiedlichen Ausführungen. So zum Beispiel für pneumatisch betätigte Scheibenbremsen, insbesondere in Schiebesattelausführung, als auch für pneumatisch betätigten Fest- oder Schwenksattelscheibenbremsen.

Pneumatisch betätigte Scheibenbremsen gehören mittlerweile zur Standardausrüstung bei schweren Nutzfahrzeugen.

Derartige Scheibenbremsen benötigen eine Vorrichtung zur Nachstellung eines Belagverschleißes. Stand der Technik ist eine automatisch arbeitende Verschleißnachstellung, womit erreicht wird, dass das so genannte Lüftspiel, damit ist der Spalt zwischen den Bremsbelägen und der Bremsscheibe im unbetätigten Zustand gemeint, unabhängig vom Verschleißzustand und Verschleißverhalten der Bremsbeläge, konstant gehalten wird.

Sehr häufig findet man in Nutzfahrzeugen Scheibenbremsen, welche über einen Nachsteller verfügen, der konzentrisch im Hohlraum eines Gewindestempels angeordnet ist und exzentrisch über ein Antriebselement (z. B.: Schaltfinger, Zahnrad) vom Bremshebel angetrieben wird.

In derartigen Nachstellvorrichtungen sind unterschiedliche Überlast- und Kupplungseinrichtungen vorgesehen, welche Drehmomente, die zur Betätigung der Nachstellvorrichtung notwendig sind (beispielsweise Nachstellen, Zurückstellen, Durchrutschen bei Erreichen von Anschlägen) übertragen und begrenzen können.

Eine solche Überlast- und Kupplungseinrichtung weist häufig eine Reibpaarung mit mindestens zwei in Kontakt stehenden Kontaktflächen auf. Die Reibpaarung wird auch als tribologische Funktionseinheit bezeichnet.

Derartige Nachstellvorrichtungen können mindestens eine Reibpaarung aufweisen.

DE 102004037771 A1 illustriert ein Beispiel.

Im Zuge der erhöhten Anforderungen hinsichtlich Wirtschaftlichkeit in Fertigung und Qualität (Wartungsintervalle) sowie gewisser Präzision bei möglichst geringem Bauraum und erhöhter Festigkeit besteht der Bedarf für eine verbesserte Nachstellvorrichtung.

Die Aufgabe der vorliegenden Erfindung besteht daher darin, eine verbesserte Nachstellvorrichtung zu schaffen.

Die Aufgabe wird durch eine Nachstellvorrichtung mit den Merkmalen des Anspruchs 1 gelöst.

Die Aufgabe wird auch durch eine Scheibenbremse mit den Merkmalen des Anspruchs 11 gelöst.

Demgemäß ist eine Nachstellvorrichtung zur Nachstellung eines Verschleißes von Bremsbelägen und Bremsscheibe einer Scheibenbremse, insbesondere pneumatisch betätigten Scheibenbremse, mit einer drehhebelbetätigten Zuspannvorrichtung, die vorzugsweise in eine Stellspindel der Scheibenbremse einsetzbar und an einem Bremssattel der Scheibenbremse mittels einer Lagerscheibe anbringbar ist, mit einer Spindel und mindestens einer Reibpaarung mit jeweils zwei Kontaktflächen, bereitgestellt. Die Nachstellvorrichtung ist dadurch gekennzeichnet, dass die mindestens eine Reibpaarung einen kurvenförmigen Querschnitt mindestens einer der Kontaktflächen aufweist.

Der kurvenförmige Querschnitt mindestens einer der Kontaktflächen der mindestens einen Reibpaarung ermöglicht eine geringere Schwankung eines mittels der Reibpaarung übertragbaren Drehmomentes bzw. einer Drehmomentbegrenzung, da aufgrund der Kurvenform eine breitflächige Auflage der Kontaktflächen mit Bildung von so genannten Kantenträgern verhindert wird. Eine genauere Drehmomentfestlegung ist möglich.

In einer Ausführung ist vorgesehen, dass der kurvenförmige Querschnitt mindestens einer der Kontaktflächen mindestens eine Erhöhung mit einem Wirkradius aufweist.

So kann der Wirkradius nicht wie in einem Fall von flächigen Kontaktflächen zwischen einem inneren Wirkradius, z.B. von 7,5 mm, und einem äußeren Wirkradius, z.B. von 10 mm, mit ca. 25% geometrisch bedingter Schwankung liegen, sondern präziser, d.h. geometrisch eindeutig bestimmt werden.

Hierzu ist der kurvenförmige Querschnitt mindestens einer der Kontaktflächen in einer bevorzugten Ausführung ballig ausgebildet ist.

Auf diese Weise kann erreicht werden, dass nach Einlauf-/Verschleißvorgängen beidseitige Abstände vom Wirkradius radial nach außen und nach innen gleichmäßig entstehen, wodurch eine genauere Festlegung des mit der Reibpaarung übertragenen Drehmomentes innerhalb engerer Toleranzen als im Stand der Technik mit planen Kontaktflächen möglich ist.

In einer weiteren Ausführung kann eine Spindelkontaktfläche der Spindel und eine Kontaktfläche einer Kugelscheibe mit einer Kugelabschnittsfläche die mindestens eine Reibpaarung bilden, wobei die Kugelscheibe mit der Kugelabschnittsfläche die Lagerscheibe kontaktiert.

In einer Ausführung kann die Kugelscheibe die mindestens eine Kontaktfläche mit dem kurvenförmigen Querschnitt aufweisen. Die Fertigungsmöglichkeiten für die Kugelscheiben können auch für den kurvenförmigen Querschnitt einfach angepasst bzw. ergänzt werden.

Dabei ist vorgesehen, dass die Kugelscheibe eine Kugelschicht, einen Trägerabschnitt und einen Kugelscheibenkontaktabschnitt umfasst, wobei der Kugelscheibenkontaktabschnitt der Kugelschicht gegenüberliegend angeordnet ist und die mindestens eine Kontaktfläche mit dem kurvenförmigen Querschnitt aufweist. Die Kugelscheibe kann einstückig oder auch aus zwei oder mehr Komponenten aufgebaut sein.

In einer weiteren Ausführung ist die Kugelscheibe mit einem Durchgang versehen, der sich durch die Kugelschicht axial erstreckt und mit einer Ausdrehung des Trägerabschnitts kommuniziert. Durch den Durchgang kann sich die Spindel der Nachstellvorrichtung erstrecken, wobei auch eine Ausrichtung von Kugelscheibe zur Spindel möglich ist.

In einer noch weiteren Ausführung kann eine axiale Durchgangslänge des Durchgangs im Wesentlichen einer axialen Schichtdicke der Kugelschicht entsprechen.

In einer anderen Ausführung kann mindestens eine der Kontaktflächen oberflächenbehandelt sein, wodurch eine Beeinflussung der Reibpaarung und somit des übertragbaren Drehmomentes zusätzlich beeinflussbar ist.

In einer noch anderen Ausführung kann die Spindelkontaktfläche der Spindel die mindestens eine Kontaktfläche mit dem kurvenförmigen Querschnitt aufweisen. Dies kann auch zusätzlich zu der Kontaktfläche der Kugelscheibe möglich sein. Dadurch kann eine einfache Erweiterung des Einsatzbereiches ermöglicht werden.

Eine Scheibenbremse, insbesondere pneumatisch betätigte Scheibenbremse, ist mit mindestens einer oben beschriebenen Nachstellvorrichtung versehen.

Die Erfindung wird nun anhand einer beispielhaften Ausführung mit Bezug auf die beigefügten Zeichnungen näher erläutert. Hierbei zeigen:
- Fig. 1: eine schematische Darstellung in einer Teilschnittansicht eines ersten Ausführungsbeispiels einer erfindungsgemäßen Nachstellvorrichtung;
- Fig. 2: eine vergrößerte Schnittdarstellung einer Kugelscheibe; und
- Fig. 3: eine schematische Darstellung in einer Teilschnittansicht eines zweiten Ausführungsbeispiels der erfindungsgemäßen Nachstellvorrichtung.

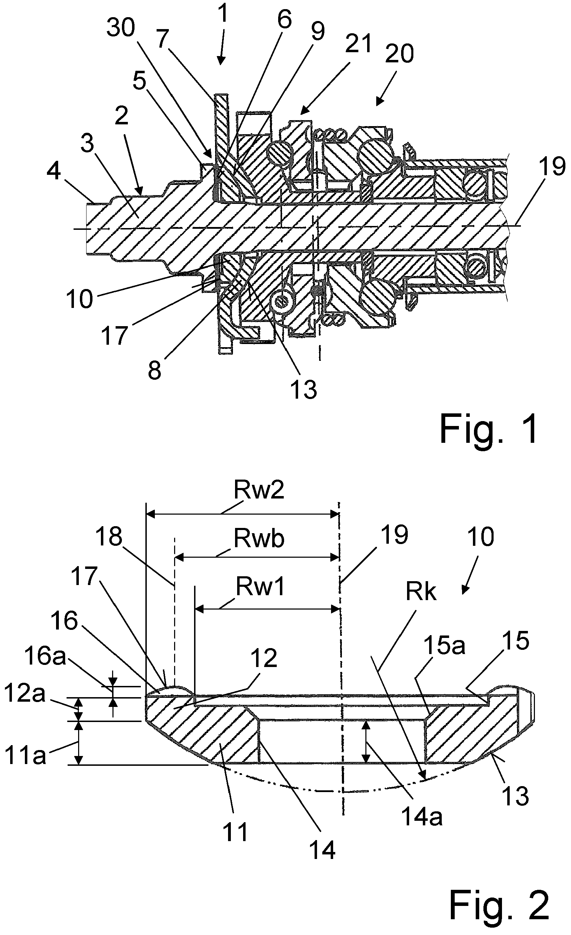

Fig. 1 ist eine schematische Darstellung in einer Teilschnittansicht eines ersten Ausführungsbeispiels einer erfindungsgemäßen Nachstellvorrichtung 1 in einem zusammengebauten Zustand.

Der Aufbau und die Funktion einer Nachstellvorrichtung 1 sind beispielsweise in der DE 102004037771 A1 beschrieben, worauf hier verwiesen wird.

Die Nachstellvorrichtung 1 nach dem ersten Ausführungsbeispiel umfasst eine Spindel 2 mit einem Spindelkörper 3 und einem Antriebszapfen 4 mit einer entsprechenden Profilierung für ein Werkzeug und einem Bund 5 an ihrem oberen Ende; eine Lagerscheibe 7 zur Befestigung der Nachstellvorrichtung 1 in einem nicht dargestellten Bremssattel einer zugeordneten Bremse; eine Kugelscheibe 10 und weitere Überlast- und Kupplungseinrichtungen 20, die hier nicht weiter beschrieben werden. Die Überlast- und Kupplungseinrichtungen 20 sind z.B. in der DE 102004037771 A1 erläutert. Die Spindel 2 weist eine Spindelachse 19, welche auch eine Längsachse der Nachstellvorrichtung 1 ist, und außerdem ein Axiallager 21 auf.

Der Bund 5 ist an seiner zu den Überlast- und Kupplungseinrichtungen 20 weisenden Seite mit einem umlaufenden Abschnitt versehen, der als Spindelkontaktfläche 4 bezeichnet ist. Die Spindelkontaktfläche 4 steht mit einer umlaufenden Kontaktfläche 17 der Kugelscheibe 10 in Kontakt, wobei die Spindelkontaktfläche 4 und die Kontaktfläche 17 eine Reibpaarung 30 zur Übertragung eines bestimmten Drehmomentes bilden.

Die Kugelscheibe 10 ist mit einer der Kontaktfläche 17 gegenüberliegenden und zu den Überlast- und Kupplungseinrichtungen 20 weisenden kugelabschnittsförmigen Seite mit einer Kugelabschnittsfläche 13 (siehe Fig. 2) in einem Aufnahmeabschnitt 8 der Lagerscheibe aufgenommen. Der Aufnahmeabschnitt 8 ist mit einer entsprechenden kugelabschnittsförmigen Aufnahmefläche 9 für die Kugelscheibe 10 ausgebildet. Die der Aufnahmefläche 9 gegenüberliegende Seite des Aufnahmeabschnitts 8 der Lagerscheibe 7 ist mit den Überlast- und Kupplungseinrichtungen 20 in nicht näher beschriebener Weise gekoppelt.

Fig. 2 zeigt eine vergrößerte Schnittdarstellung der Kugelscheibe 10.

Die Kugelscheibe 10 umfasst eine Kugelschicht 11 mit einer Schichtdicke 11 a, einen Trägerabschnitt 12 mit einer Trägerdicke 12a und einen Kugelscheibenkontaktabschnitt 16 mit einer Kontaktabschnittsdicke 16a. Die Schichtdicke 11a, die Trägerdicke 12a und die Kontaktabschnittsdicke 16a erstrecken sich in Richtung der Spindelachse 19.

Die Kugelschicht 11 weist an der in Fig. 2 unten liegenden Seite die Kugelabschnittsfläche 13 auf. Diese Kugelabschnittsfläche 13 ist eine ringförmig umlaufende Fläche, welche einen Kugelradius Rk besitzt. Mit dem Strich-Doppelpunkt-Bogen ist der zur der Kugelabschnittsfläche 13 zugehörige Kugelabschnitt mit dem Kugelradius Rk angedeutet.

Die Kugelschicht 11 ist in ihrer Axialrichtung, d.h. in Richtung der Spindelachse 19, mit einem Durchgang 14 versehen, welcher sich in Richtung der Spindelachse 19 in einer Durchgangslänge 14a erstreckt. Ein Durchmesser des Durchgangs 14 korrespondiert mit einem Außendurchmesser eines Abschnitts des Spindelkörpers 3, der im zusammengebauten Zustand der Nachstellvorrichtung 1 (Fig. 1) durch den Durchgang 14 verläuft.

An der der Kugelabschnittsfläche 13 gegenüberliegenden Seite ist die Kugelschicht 11 mit dem Trägerabschnitt 12 verbunden. In diesem Ausführungsbeispiel sind die Kugelschicht 11 und der Trägerabschnitt 12 einstückig ausgebildet.

Der Trägerabschnitt 12 ist von der der Kugelabschnittsfläche 13 gegenüberliegenden Seite her (in Fig. 2 die obere Seite) mit einer Ausdrehung 15 versehen, welche mit dem Durchgang 14 der Kugelschicht 11 kommuniziert. In diesem Beispiel ist eine Fase 15a für den Übergang vorgesehen.

Die Durchgangslänge 14a, welche den Beginn der Fase 15a axial festlegt, entspricht in diesem Ausführungsbeispiel im Wesentlichen der Schichtdicke 11a.

Durch die Ausdrehung 15 ist der Trägerabschnitt 12 mit einer Art umlaufender Flachring ausgebildet, dessen Innenradius hier als innerer Wirkradius Rw1 angegeben ist. Der Außenradius des Trägerabschnitts 12 ist als äußerer Wirkradius Rw2 bezeichnet. Von diesen beiden Wirkradien Rw1 und Rw2 ist ein dazwischen liegender umlaufender Bereich festgelegt. Auf diesem umlaufenden Bereich ist der Kugelscheibenkontaktabschnitt 16 geformt, welcher zur Zusammenwirkung mit der Spindelkontaktfläche 6 an dem Bund 5 der Spindel 2 vorgesehen ist (siehe Fig. 1).

In diesem Ausführungsbeispiel ist am Umfang der Kugelscheibe 10 (in Fig. 2 rechts) mindestens ein nicht näher bezeichneter Zahn parallel zur Spindelachse eingeformt, welcher sich durch den Kugelscheibenabschnitt 11 und den Trägerabschnitt 12 hindurch erstreckt.

In der Querschnittdarstellung nach Fig. 2 ist der Querschnitt des Kugelscheibenkontaktabschnitts 16 kurvenförmig mit einer Erhöhung ausgebildet. In diesem Ausführungsbeispiel die der kurvenförmige Querschnitt ballig geformt. Andere Formen sind natürlich auch möglich, z.B. oval. Der Kugelscheibenkontaktabschnitt 16 weist die Kontaktfläche 17 auf, welche der Kugelabschnittsfläche 13 gegenüberliegt und im zusammengebauten Zustand der Nachstellvorrichtung 1 (Fig. 1) die Spindelkontaktfläche 6 kontaktiert.

Aufgrund der Balligkeit des Kugelscheibenkontaktabschnitts 16 ist ein Wirkradius Rwb geometrisch eindeutig bestimmt. Der Wirkradius Rwb verläuft von der Spindelachse 19 bis zu einer gedachten und in der Fig. 2 gestrichelt angedeuteten Kontaktflächenmittellinie 18, welche im höchsten Punkt der Kontaktfläche 17 liegt. Mit dem Begriff "höchster Punkt" ist hier der größte Abstand der Kontaktfläche 17 von einer gedachten Planfläche des umlaufenden als Flachring ausgebildeten Abschnitts des Trägerabschnitts 12 gemeint. Dieser größte Abstand ist hier die Kontaktabschnittsdicke 16a.

Im zusammengebauten Zustand der Nachstellvorrichtung 1 (Fig. 1) kontaktiert die Spindelkontaktfläche 6 die Kontaktfläche 17 in einem idealen und neuen Zustand in einer Kreislinie mit dem Wirkradius Rwb. Nach Einlauf- und Verschleißvorgänge wird die Kreislinie breiter, d.h. zu einem Kreisring mit dem mittleren Radius als Wirkradius Rwb, wobei jeweils ein im Wesentlichen gleicher Abstand von dem Wirkradius Rwb in Richtung auf den inneren Wirkradius Rw1 und auf den äußeren Wirkradius Rw2 entsteht und sich vergrößert. Mit anderen Worten wird der im Wesentlichen gleiche Abstand radial nach außen und radial nach innen entstehen. Beide Abstände vergrößern sich in Abhängig vom Einlauf- und Verschleiß gleichmäßig. Somit ist bei dieser Reibpaarung 30 zwischen Spindelkontaktfläche 6 und Kontaktfläche 17 ein Kontakt sichergestellt.

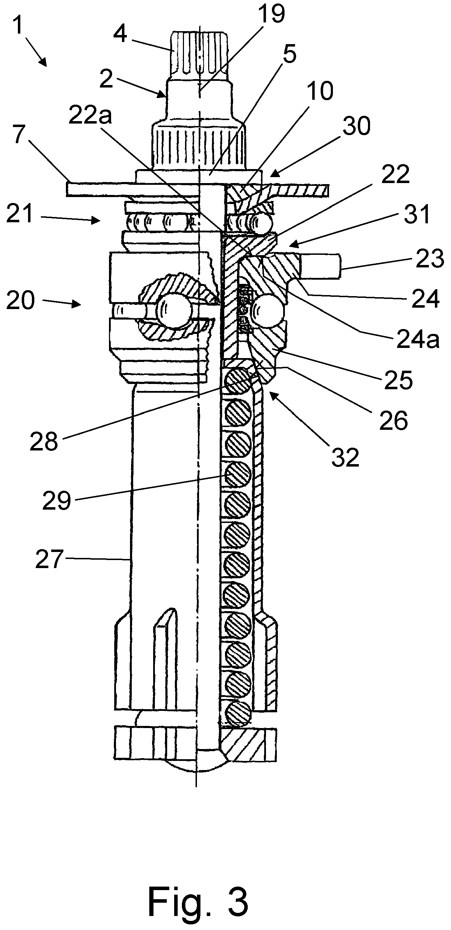

In Fig. 3 ist ein zweites Ausführungsbeispiel der erfindungsgemäßen Nachstellvorrichtung 1 dargestellt. Die Nachstellvorrichtung 1 weist einen Aufbau auf, der im Wesentlichen aus folgenden Funktionselementen besteht:
- Spindel 2
- Lagerscheibe 7
- Axiallager 21
- Bundbuchse, bzw. Distanzhülse 22
- Schaltgabel, bzw. Antriebsring 23
- Überlast- und Kupplungseinrichtung 20, bzw. Kugelrampenkupplung, Konuskupplung
- Zylinderfeder 29

Dieser wesentliche Aufbau der Nachstellvorrichtung 1 ist in der DE 10 2004 037 711 A1 beschrieben.

Die Nachstellvorrichtung 1 nach dem zweiten Ausführungsbeispiel weist drei Reibpaarungen 30, 31 und 32 auf, welche jeweils mindestens zwei miteinander in Kontakt stehende Kontaktflächen besitzen.

Die erste Reibpaarung 30 besteht zwischen dem Bund 5 und der Kugelscheibe 10 und weist als Kontaktflächen die Spindelkontaktfläche 6 und die Kontaktfläche 17 der Kugelscheibe 10 auf. Die Ausbildung der Kontaktflächen 6 und 17 der ersten Reibpaarung 30 ist oben ausführlich beschrieben.

Die zweite Reibpaarung 31 ist zwischen einer Bundbuchse 22 des Axiallagers 21 und einer Kupplungsbuchse 24, die mit dem Antriebsring 23 verbunden ist, angeordnet. Die Kupplungsbuchse 24 ist Bestandteil der Kugelrampenkupplung der Überlast- und Kupplungseinrichtung 20. Die Kontaktflächen der zweiten Reibpaarung 31 umfassen eine Bundbuchsenkontaktfläche 22a und eine Kupplungsbuchsenkontaktfläche 24a. Die Bundbuchsenkontaktfläche 22a und die Kupplungsbuchsenkontaktfläche 24a sind in gleicher Art und Weise wie die oben beschriebenen Kontaktflächen 6 und 17 der ersten Reibpaarung 30 ausgebildet.

Die dritte Reibpaarung 32 ist in einer Konuskupplung der Überlast- und Kupplungseinrichtung 20 angeordnet und umfasst eine Konusbuchsenkontaktfläche 26 einer Konusbuchse 25 und eine Federhülsenkontaktfläche 28 einer Federhülse 27. Die Konusbuchse 25 ist auch ein Bestandteil der Kugelrampenkupplung der Überlast- und Kupplungseinrichtung 20, wobei die Federhülse 27 die Zylinderfeder 29 umgibt.

Bei allen Reibpaarungen 30, 31, 32 zwischen den zugehörigen Funktionselementen ist ein Kontakt sichergestellt. So genannte Kantenträger, wie beispielsweise im Falle einer planen Kontaktfläche, werden verhindert. Ein jeweils durch diese Reibpaarungen 30, 31, 32 übertragbares Drehmoment wird dadurch deutlich stabilisiert, d.h. die Toleranz des jeweiligen übertragbaren Drehmomentes fällt eng aus und kann daher präzise festgelegt werden. Somit ist auch eine Festlegung einer durch diese Reibpaarungen 30, 31, 32 bestimmten Drehmomentbegrenzung präzise möglich.

Die beschriebenen Ausführungsbeispiele der Nachstellvorrichtung 1 können z.B. in einer Stellspindel einer pneumatischen Scheibenbremse angeordnet sein. Einen Aufbau und eine Funktion einer solchen pneumatischen Scheibenbremse beschreibt z.B. DE 197 29 024 C1. Die Nachstellvorrichtung 1 wäre auch für eine elektromotorisch betätigte Scheibenbremse geeignet.

Die Erfindung ist nicht auf die oben beschriebenen Ausführungsbeispiele beschränkt. Sie ist im Rahmen der beigefügten Ansprüche modifizierbar.

Der kurvenförmige Querschnitt kann mit mehr als einer Erhöhung ausgebildet sein.

So kann zum Beispiel bei der Reibpaarung 30 der ballige Kugelscheibenkontaktabschnitt 16 anstelle an der Kugelscheibe 10 an der Unterseite des Bunds 5 der Spindel 2 angeordnet sein. Das gleiche gilt auch für die jeweiligen Kontaktflächen 22a, 24a und 26, 26 der Reibpaarungen 31 und 32, wie auch für jede weitere, nicht gezeigte Reibpaarung.

Es ist auch denkbar, dass sowohl der Trägerabschnitt 12 der Kugelscheibe 10 als auch die Unterseite des Bunds 5 der Spindel 2 jeweils mit einem balligen Kontaktflächenabschnitt ausgerüstet sind. Dieses kann auch bei jeder anderen Reibpaarung der Nachstellvorrichtung 1 so ausgeführt sein.

Die Unterseite des Bunds 5 der Spindel 2 und/oder die anderen Kontaktflächen 22a, 26 können mit einer bestimmten Oberflächenbearbeitung oder/und Oberflächenbeschichtung zur Beeinflussung der jeweiligen Reibpaarung 30, 31, 32 versehen sein. Dies ist natürlich ebenfalls für die jeweils zugehörigen Kontaktflächen 17, 24a, 28 möglich.

### Bezugszeichenliste

- 1: Nachstellvorrichtung
- 2: Spindel
- 3: Spindelkörper
- 4: Antriebszapfen
- 5: Bund
- 6: Spindelkontaktfläche
- 7: Lagerscheibe
- 8: Aufnahmeabschnitt
- 9: Aufnahmefläche
- 10: Kugelscheibe
- 11: Kugelscheibenabschnitt
- 11 a: Schichtdicke
- 12: Trägerabschnitt
- 12a: Trägerdicke
- 13: Kugelabschnittsfläche
- 14: Durchgang
- 14a: Durchgangslänge
- 15: Ausdrehung
- 15a: Fase
- 16: Kugelscheibenkontaktabschnitt
- 16a: Kontaktabschnittsdicke
- 17: Kontaktfläche
- 18: Kontaktflächenmittellinie
- 19: Spindelachse
- 20: Überlast- und Kupplungseinrichtung
- 21: Axiallager
- 22: Bundbuchse
- 22a: Bundbuchsenkontaktfläche
- 23: Antriebsring
- 24: Kupplungsbuchse
- 24a: Kupplungsbuchsenkontaktfläche
- 25: Konusbuchse
- 26: Konusbuchsenkontaktfläche
- 27: Federhülse
- 28: Federhülsenkontaktfläche
- 29: Zylinderfeder
- 30,31,32: Reibpaarung
- Rk: Kugelradius
- Rwb: Wirkradius
- Rw1: Innerer Wirkradius
- Rw2: Äußerer Wirkradius

## Patentansprüche

1. Nachstellvorrichtung (1) zur Nachstellung eines Verschleißes von Bremsbelägen und Bremsscheibe einer Scheibenbremse, insbesondere pneumatisch betätigten Scheibenbremse, mit einer drehhebelbetätigten Zuspannvorrichtung, die vorzugsweise in eine Stellspindel der Scheibenbremse einsetzbar und an einem Bremssattel der Scheibenbremse mittels einer Lagerscheibe (7) anbringbar ist, mit einer Spindel (2) und mindestens einer Reibpaarung (30, 31, 32) mit jeweils zwei Kontaktflächen (6, 17; 22a, 24a; 26, 28) **dadurch gekennzeichnet, dass**
die mindestens eine Reibpaarung (30, 31, 32) einen kurvenförmigen Querschnitt mindestens einer der Kontaktflächen (6, 17; 22a, 24a; 26, 28) aufweist.

2. Nachstellvorrichtung (1) nach Anspruch 1, **dadurch gekennzeichnet, dass** der kurvenförmige Querschnitt mindestens einer der Kontaktflächen (6, 17; 22a, 24a; 26, 28) der mindestens einen Reibpaarung (30, 31, 32) mindestens eine Erhöhung mit einem Wirkradius (Rwb) aufweist.

3. Nachstellvorrichtung (1) nach Anspruch 2, **dadurch gekennzeichnet, dass** der kurvenförmige Querschnitt mindestens einer der Kontaktflächen (6, 17; 22a, 24a; 26, 28) der mindestens einen Reibpaarung (30, 31, 32) ballig ausgebildet ist.

4. Nachstellvorrichtung (1) nach mindestens einem der vorhergehenden Ansprüche, **dadurch gekennzeichnet, dass** eine Spindelkontaktfläche (6) der Spindel (2) und eine Kontaktfläche (17) einer Kugelscheibe (10) mit einer Kugelabschnittsfläche (13) die mindestens eine Reibpaarung (30) bilden, wobei die Kugelscheibe (10) mit der Kugelabschnittsfläche (13) die Lagerscheibe (7) kontaktiert.

5. Nachstellvorrichtung (1) nach Anspruch 4, **dadurch gekennzeichnet, dass** die Kugelscheibe (10) die mindestens eine Kontaktfläche (17) mit dem kurvenförmigen Querschnitt aufweist.

6. Nachstellvorrichtung (1) nach Anspruch 5, **dadurch gekennzeichnet, dass**
die Kugelscheibe (10) eine Kugelschicht (11), einen Trägerabschnitt (12) und einen Kugelscheibenkontaktabschnitt (16) umfasst, wobei der Kugelscheibenkontaktabschnitt (16) der Kugelschicht (11) gegenüberliegend angeordnet ist und die mindestens eine Kontaktfläche (17) mit dem kurvenförmigen Querschnitt aufweist.

7. Nachstellvorrichtung (1) nach Anspruch 6, **dadurch gekennzeichnet, dass** die Kugelscheibe (10) einen Durchgang (14) aufweist, der sich durch die Kugelschicht (11) axial erstreckt und mit einer Ausdrehung (15) des Trägerabschnitts (12) kommuniziert.

8. Nachstellvorrichtung (1) nach Anspruch 7, **dadurch gekennzeichnet, dass** eine axiale Durchgangslänge (14a) des Durchgangs (14) im Wesentlichen einer axialen Schichtdicke (12a) der Kugelschicht (12) entspricht.

9. Nachstellvorrichtung (1) nach mindestens einem der vorhergehenden Ansprüche, **dadurch gekennzeichnet, dass** mindestens eine der Kontaktflächen (6, 17; 22a, 24a; 26, 28) der mindestens einen Reibpaarung (30, 31, 32) oberflächenbehandelt ist.

10. Nachstellvorrichtung (1) nach mindestens einem der Ansprüche 4 bis 9, **dadurch gekennzeichnet, dass** die Spindelkontaktfläche (6) der Spindel (2) die mindestens eine Kontaktfläche (6) der mindestens einen Reibpaarung (30, 31, 32) mit dem kurvenförmigen Querschnitt aufweist.

11. Scheibenbremse, insbesondere pneumatisch betätigte Scheibenbremse, mit mindestens einer Nachstellvorrichtung (1) nach mindestens einem der vorhergehenden Ansprüche.

## Claims

1. Adjustment device (1) for wear compensation of brake pads and brake disc of a disc brake, in particular a pneumatically actuated disc brake, having a brake application device which is actuated by a rotary lever, can preferably be inserted into an actuating spindle of the disc brake and can be attached to a brake calliper of the disc brake by means of a bearing plate (7), having a spindle (2) and at least one friction combination (30, 31, 32) with in each case two contact faces (6, 17; 22a, 24a; 26, 28), **characterised in that** the at least one friction combination (30, 31, 32) has a curved cross-section of at least one of the contact faces (6, 17; 22a, 24a; 26, 28).

2. Adjustment device (1) according to claim 1, **characterised in that** the curved cross-section of at least one of the contact faces (6, 17; 22a, 24a; 26, 28) of the at least one friction combination (30, 31, 32) has at least one elevation with an effective radius.

3. Adjustment device (1) according to claim 2, **characterised in that** the curved cross-section of at least one of the contact faces (6, 17; 22a, 24a; 26, 28) of the at least one friction combination (30, 31, 32) is of spherical configuration.

4. Adjustment device (1) according to at least one of the preceding claims, **characterised in that** a spindle contact face (6) of the spindle (2) and a contact face (17) of a spherical disc (10) with a spherical section face (13) form the at least one friction combination (30), the spherical disc (10) making contact by way of the spherical section face (13) with the bearing plate (7).

5. Adjustment device (1) according to claim 4, **characterised in that** the spherical disc (10) has the at least one contact face (17) with the curved cross-section.

6. Adjustment device (1) according to claim 5, **characterised in that** the spherical disc (10) comprises a spherical layer (11), a carrier section (12) and a spherical disc contact section (16), the spherical disc contact section (16) being arranged so as to lie opposite the spherical layer (11) and having the at least one contact face (17) with the curved cross-section.

7. Adjustment device (1) according to claim 6, **characterised in that** the spherical disc (10) has a passage (14) which extends axially through the spherical layer (11) and communicates with a hollowed-out portion (15) of the carrier section (12).

8. Adjustment device (1) according to claim 7, **characterised in that** an axial passage length (14a) of the passage (14) corresponds substantially to an axial layer thickness (12a) of the spherical layer (12).

9. Adjustment device (1) according to at least one of the preceding claims, **characterised in that** at least one of the contact faces (6, 17; 22a, 24a; 26, 28) of the at least one friction combination (30, 31, 32) is surface-created.

10. Adjustment device (1) according to at least one of claims 4 to 9, **characterised in that** the spindle contact face (6) of the spindle (2) has the at least one contact face (6) of the at least one friction combination (30, 31, 32) with the curved cross-section.

11. Disc brake, in particular a pneumatically actuated disc brake, having at least one adjustment device (1) according to at least one of the preceding claims.

## Revendications

1. Dispositif de rattrapage de jeu (1) pour le rattrapage de l'usure des garnitures de frein et du disque de frein d'un frein à disque, en particulier d'un frein à disque à commande pneumatique, comprenant un dispositif de serrage, commandé par un levier rotatif, qui est apte, de préférence, à être inséré dans un vis de réglage dudit frein à disque et à être monté à un étrier de frein dudit frein à disque moyennant un support rondelle (7), comprenant une broche (2) et au moins un couple de friction (30, 31, 32) à deux surfaces de contact respectives (6, 17; 22a, 24a; 26, 28),
**caractérisé en ce**
**que** ledit au moins un couple de friction (30, 31, 32) présente une section transversale incurvée d'au moins une desdites surfaces de contact (6, 17 ; 22a, 24a ; 26, 28).

2. Dispositif de rattrapage de jeu (1) selon la revendication 1, **caractérisé en ce que** ladite section transversale incurvée d'au moins une desdites surfaces de contact (6, 17 ; 22a, 24a ; 26, 28) dudit au moins un couple de friction (30, 31, 32) présente au moins une colline à un rayon d'action (Rwb).

3. Dispositif de rattrapage de jeu (1) selon la revendication 2, **caractérisé en ce que** ladite section transversale incurvée d'au moins une desdites surfaces de contact (6, 17 ; 22a, 24a ; 26, 28) dudit au moins un couple de friction (30, 312, 32) a une configuration bombée.

4. Dispositif de rattrapage de jeu (1) selon au moins une quelconque des revendications précédentes, **caractérisé en ce qu'**une surface de contact de broche (6) de ladite broche (2) et une surface de contact (17) d'une rondelle sphérique (10) constituent, ensemble avec une surface de fragment de sphère (13), ledit au moins un couple de friction (30), à ladite rondelle sphérique (10) avec ladite surface de fragment de sphère (13) se trouvant en contact avec le disque de palier (7).

5. Dispositif de rattrapage de jeu (1) selon la revendication 4, **caractérisé en ce que** ladite rondelle sphérique (10) présente ladite au moins une surface de contact (17) avec ladite section transversale incurvée.

6. Dispositif de rattrapage de jeu (1) selon la revendication 5, **caractérisé en ce que** ladite rondelle sphérique (10) comprend une couche sphérique (11), une section de support (12) et une section de contact de la rondelle sphérique (16), à ladite section de contact de la rondelle sphérique (16) est disposée en opposition à ladite couche sphérique (11) et présente ladite au moins une surface de contact (17) à la section transversale incurvée.

7. Dispositif de rattrapage de jeu (1) selon la revendication 6, **caractérisé en ce que** ladite rondelle sphérique (10) présente un passage (14), qui s'étend en sens axial à travers ladite couche sphérique (11) et qui se trouve en communication avec un alésage (15) de ladite section de support (12).

8. Dispositif de rattrapage de jeu (1) selon la revendication 7, **caractérisé en ce qu'**une longueur de passage axiale (14a) dudit passage (14) correspond essentiellement à une épaisseur de couche (12a) en sens axial de ladite couche sphérique (12).

9. Dispositif de rattrapage de jeu (1) selon au moins une quelconque des revendications précédentes, **caractérisé en ce qu'**au moins une desdites surfaces de contact (6, 17 ; 22a, 24a ; 26, 28) dudit au moins un couple de friction (30, 31, 32) est traitée en surface.

10. Dispositif de rattrapage de jeu (1) selon au moins une quelconque des revendications précédentes, **caractérisé en ce que** ladite surface de contact de broche (6) de ladite broche (2) comprend ladite au moins une surface de contact (6) dudit au moins un couple de friction (30, 31, 32) à la section transversale incurvée.

11. Frein à disque, en particulier frein à disque à commande pneumatique, comprenant au moins un dispositif de rattrapage de jeu (1) selon au moins une quelconque des revendications précédentes.
